# FASCICULE DE BREVET EUROPEEN

(11) **EP 4 302 968 B1**
(45) Date de publication et mention de la délivrance du brevet: **19.03.2025**
(21) Numéro de dépôt: 22192710.6
(22) Date de dépôt: 30.08.2022
(51) Int. Cl.: B29C 64/393, B22F 10/39, B22F 10/85, B22F 12/80, B22F 12/90, G05B 19/4099, B33Y 50/02

(54) **SYSTÈME DE PRODUCTION PAR IMPRESSION 3D INTELLIGENT ET PILOTÉ PAR LA DONNÉE**
INTELLIGENTES, DATENGESTEUERTES 3D-DRUCKERZEUGUNGSSYSTEM
INTELLIGENT AND DATA-DRIVEN 3D PRINTING PRODUCTION SYSTEM

(43) Date de publication de la demande: 10.01.2024
(73) Titulaire: Handddle, 33130 Begles (FR)
(72) Inventeur: TALEB, Dylan, 33520 BRUGES (FR); BOURGOIN, Thomas, 33130 BEGLES (FR); MARIGO, Pierre, 31150 FENOUILLET (FR)
(74) Mandataire: Aquinov

(56) Documents cités:
- CN-A- 111 890 811
- KR-B1- 101 791 067
- US-A1- 2019 291 184
- ANONYMOUS: "handddle site:youtube.com - Google Search", 30 May 2021 (2021-05-30), XP093019607, Retrieved from the Internet <URL:https://www.google.com/search?q=handddle%20site:youtube.com&rlz=1C1GCEB_enNL872NL875&oq=youtube&aqs=chrome.0.0i271j46i67i199i465j0i67j0i512l6j0i271.1939j0j15&sourceid=chrome&ie=UTF-8&ved=2ahUKEwiV5oGskvL8AhX1RPEDHbeRB80Q2wF6BAgZEAE&ei=WDbZY5XaIPWJxc8Pt6Oe6Aw#fpstate=ive&vld=cid:298a7ada,vid:GHUjTcHe> [retrieved on 20230201]
- A. LAURENT: "Avec ses micro-usines, Handddle industrialise l'impression 3D", 14 April 2022 (2022-04-14), XP002808564, Retrieved from the Internet <URL:https://www.placeco.fr/gironde/demain/article/avec-ses-micro-usines-handddle-industrialise-limpression-3d-1566> [retrieved on 20230201]
- MADELEINE P.: "#3DStartup: Handddle Structures and Industrializes the Uses of 3D Printing", 8 July 2021 (2021-07-08), XP002808565, Retrieved from the Internet <URL:https://www.3dnatives.com/en/3dstartup-handddle-structures-industrializes-3d-printing-080720214/> [retrieved on 20230201]

## Description

### Domaine technique.

L'invention se rapporte au domaine technique de la production d'une pièce par un procédé de fabrication additive.

### Etat de la technique.

Les imprimantes 3D sont connues depuis de nombreuses années pour mettre en œuvre des procédés de fabrication additive pour la fabrication de diverses pièces de diverses tailles. Ces imprimantes 3D sont notamment connues pour être utilisées dans divers domaines tels que l'industrie, l'aéronautique, la construction, l'armée ou encore la bio-impression. De façon classique, elles permettent de réaliser de façon rapide et à bas coût un prototype.

Désormais, compte tenu des problématiques modernes de l'industrie, comme la réduction des émissions de CO2, la relocalisation d'une production ou encore la flexibilité d'une unité de production au regard de l'évolution d'un produit, elles sont également utilisées dans un contexte industriel pour la fabrication séries de pièces identiques. Dans ce contexte, une entreprise peut ainsi s'équiper de plusieurs imprimantes 3D, réparties sur un même site et/ou sur différents sites distincts. De même, une entreprise peut se fournir, pour une même pièce, auprès d'un fournisseur équipé d'imprimantes 3D, voire auprès de plusieurs fournisseurs différents. Elle peut ainsi adapter à la demande sa cadence de production, produire sur une même chaine d'assemblage différents types de pièces, modifier rapidement le design d'une pièce et simplifier sa logistique en se rapprochant de différents lieux d'approvisionnement ou de différents lieux de livraison.

Toutefois, dans de nombreux secteurs comme l'industrie pharmaceutique, l'industrie automobile, le secteur de la défense, une pièce doit être qualifiée et, en d'autres termes, doit répondre à un cahier des charges donné et à des exigences ou des normes de qualité. Elle doit ainsi résulter d'un procédé de fabrication permettant de certifier, de façon traçable, que la pièce est conforme à ce cahier des charges, ces exigences et/ou ces normes.

Or, ces exigences de qualification, de certification et de traçabilité sont peu compatibles, de prime abord, avec l'utilisation d'imprimantes 3D dans un contexte de production industrielle.

En effet, une même entreprise peut employer, sur un même site ou sur plusieurs sites, de multiples technologies de fabrication additive permettant d'aboutir à une même pièce, ce qui complexifie grandement la certification et la traçabilité de cette pièce. Par ailleurs, des conditions de production susceptibles d'impacter la qualité de la pièce produite, comme notamment la température ou l'humidité, peuvent varier fortement d'un espace de production à un autre et d'un moment de production à un autre, y compris sur un même site, de sorte que la reproductibilité de la pièce peut être difficilement garantie. En d'autres termes, la variabilité spatiale, technologique et temporelle des environnements de production utilisant une imprimante 3D rend complexe la qualification, la certification et la traçabilité des pièces produite par fabrication additive.

En outre, au-delà du procédé de fabrication additive mis en œuvre, la production d'une pièce par une imprimante 3D implique de nombreuses étapes manuelles, en amont de l'impression (comme la sélection d'un fichier numérique représentant la pièce à produire, le chargement d'une matière première dans l'imprimante) ou en aval de l'impression (comme un contrôle qualité de la pièce produite ou un post-traitement de cette pièce). Or, ces étapes ne sont généralement pas contrôlées ou validées, du moins de façon systématique, et ne peuvent pas être intégrées dans la qualification, la certification et la traçabilité des pièces produite par fabrication additive, malgré les conséquences qu'elles peuvent engendrer.

Enfin, les imprimantes 3D sont généralement employées pour la fabrication d'un seul type de pièce, alors qu'elles sont par nature destinées à la production de plusieurs types de pièces différents. Ceci résulte principalement de l'absence d'une solution d'organisation, pilotée par des données, d'une chaine de production employant plusieurs imprimantes 3D, éventuellement basées sur des technologies différentes et/ou localisées dans des lieux différents, afin de produire, à la demande, différents types de pièce. La divulgation suivante:
"handddle site:youtube.com - Google Search",, 30 mai 2021 (2021-05-30), XP093019607,Extrait de l'Internet:URL:https://www.google.com/search?q=handddle %20site:youtube.com&rlz=iCiGCEB_enNL872NL875&oq=youtube&aqs=chrome.0.0i271j46i67i199i465j0i67j0i51216j montre un système de production additive comportant différents modules.

De façon générale, il existe ainsi un besoin pour une solution universelle de gestion d'une chaine de production employant des imprimantes 3D, quels que soient leur nombre, leur type de technologie, leurs emplacements, la variabilité des environnements de production, et qui permette de qualifier, de certifier et de tracer la production de pièces par la chaine, quels que soient la nature des matières premières, les étapes de production, le type et le nombre de pièces produites.

L'invention se place donc dans ce contexte et cherche à résoudre l'ensemble des inconvénients précités en répondant audit besoin.

### Présentation de l'invention.

L'invention a pour objet un système de production selon la revendication 1.

L'invention propose ainsi une unité de production, ou « smart farm », définissant un environnement de production par fabrication additive maitrisé, capable de dialoguer en temps réel avec un système de contrôle pour communiquer différentes données relatives à cet environnement de production. On comprend que lors de la mise en œuvre d'un procédé de fabrication par une imprimante 3D agencée dans l'unité de production, pour chaque étape du procédé, y compris pour des étapes amont ou aval de la fabrication additive, le système de contrôle peut recevoir la valeur de chaque paramètre acquise par chaque capteur de chaque module. En outre, une alerte spécifique est émise en cas de dérive d'une valeur d'un paramètre dépassant un seuil fixé dudit paramètre pour chaque étape.

Dès lors, il est possible d'interconnecter plusieurs unités de production, prévues sur un même site ou sur plusieurs sites, voire chez plusieurs fabricants différents, avec un même système de contrôle qui peut alors mettre en œuvre différents outils d'organisation de la chaine de production. On pourra par exemple implémenter au niveau du système de contrôle des jumeaux numériques de chaque unité de production, voire de chaque module de ces unités de production, ces jumeaux numériques étant nourris au moyen des données transmises par les différents capteurs.

Le système de contrôle permettra ainsi de visualiser en temps réel les paramètres critiques des modules des unités de production, les stocks et les consommations de matière première, d'influer sur ces paramètres critiques en cas de dérive vis-à-vis de consignes, voire de réaliser de l'anticipation ou de la prédiction de maintenance des différentes machines.

Le système pourra également permettre d'organiser la chaine de production, par exemple en offrant la possibilité de mettre à jour rapidement un design d'une pièce à produire, en répartissant et en adaptant automatiquement les volumes de production d'une pièce donnée pour chacune des machines des unités de production en fonction des données remontées au système de contrôle.

Enfin, le système permettra de certifier simplement, et de façon traçable, qu'une pièce donnée a été produite selon un procédé de fabrication qualifié et que l'ensemble des étapes requises, y compris les étapes amont et aval à la fabrication additive, ont été respectées et validées. A l'inverse, toute pièce non conforme, c'est-à-dire produite sans respecter toutes les étapes du procédé qualifié et/ou en dehors des marges de tolérance spécifiées, pourra être identifiée et écartée rapidement. En outre, le fait qu'une alerte identifie un module responsable d'une non-conformité et/ou l'étape ayant entrainé cette non-conformité permet de procéder à un correctif du procédé de fabrication et/ou une maintenance du module.

Selon l'invention, le système comporte plusieurs unités de production.

Dans l'invention, chacun des modules de l'unité de production ou de chaque unité de production est défini par un ensemble de parois définissant une enceinte close dudit module. Chacun des modules est muni d'une porte d'accès à cette enceinte ménagée dans l'une desdites parois.

Chaque module définit ainsi un environnement de production standard, clos et maitrisé. Les différent composants du système de production revendiqué étant définis dans la revendication 1. Chaque module peut comporter un ou plusieurs capteurs choisis parmi les éléments suivants : capteur d'humidité, capteur de température (ambiante ou de proximité d'un élément donné), capteur de son, capteur de vibration, capteur de poids, capteur de pression, capteur de débit d'air ou de liquide, capteur chimique ou de particule (gaz, pollution ou particules), détecteur de présence, détecteur de position, caméra, capteur d'une puissance électrique ou magnétique, etc.

Le système de contrôle peut être relié aux modules de l'unité de production, voire de chaque unité de production, par une liaison filaire, par exemple par un câble ou en variante par une liaison distante, par exemple par une liaison sans fil par échange de données selon un protocole donné, par exemple un protocole Wifi^{®} ou un protocole Bluetooth^{®} ou un protocole ANT+. Le système de contrôle pourra par exemple comporter une plateforme logicielle distante des modules, et comportant une pluralité d'outils de gestion des modules.

La plateforme logicielle pourra comporter par exemple une interface de conception et de qualification d'un procédé de fabrication d'une pièce donnée, incluant :
- un outil de téléchargement d'un fichier de fabrication, notamment sous la forme d'un modèle 3D de la pièce,
- une interface de sélection d'une machine de fabrication additive et d'une matière première,
- une interface de saisie d'étapes amont et/ou aval du procédé de fabrication ; et
- une interface de saisie d'un ensemble de paramètres à surveiller et de consignes de ces paramètres, par exemple sous la forme de plages de tolérance, pour chacune des étapes du procédé de fabrication ainsi conçu.

En d'autres termes, l'ensemble des étapes du procédé pourra ainsi être intégré, testé et qualifié avant d'être stocké dans la mémoire du système de contrôle.

La plateforme logicielle pourra également comporter une interface de visualisation des différents modules interconnectés avec le système de contrôle permettant de visualiser, en temps réel, les paramètres et données communiqués par ces modules, voire de surveiller la mise en œuvre d'un procédé de fabrication d'une pièce donnée par une unité de production, par exemple en visualisant les étapes courantes de la fabrication de cette pièce et les alertes générées par le système de contrôle au cours de cette fabrication. L'interface de visualisation pourra également contenir un journal, ou log, des différentes alertes générées afin de garantir la traçabilité de la production. La plateforme logicielle pourra également générer, pour chaque pièce produite, une fiche certifiant que la pièce a été produite conformément au procédé de fabrication qui a été qualifié, ou au contraire indiquant que la pièce est non conforme.

Enfin, la plateforme logicielle pourra comporter une interface de gestion et de contrôle de chaque unité de production, permettant de visualiser les stocks de matières premières de chaque unité de production, et d'organiser et de planifier, automatiquement ou manuellement, la production machine par machine ou à l'échelle de chaque unité de production, par exemple en organisant et en planifiant différents procédés de fabrication de différentes pièces sur plusieurs machines de chaque unité de production.

Dans l'invention, un procédé de fabrication additive définit une pluralité d'étapes, dont :
- des étapes dites amont à la fabrication additive, manuelles ou automatiques, comme la vérification et le chargement d'une matière première contenue dans un module de stockage de matière première dans une machine de fabrication additive d'un autre module, la préparation d'une machine de fabrication additive d'un module, le préchauffage d'une machine de fabrication additive d'un module ;
- des étapes de fabrication additive de la pièce prédéterminée au moyen d'une machine de fabrication additive d'un module ;
- des étapes dites aval à la fabrication additive, comme une étape de post-traitement ou de finition de la pièce (ponçage, nettoyage, désolidarisation du support, peinture), une étape de contrôle de la pièce, ou encore une étape de nettoyage d'un module équipé d'une machine de fabrication additive.

De préférence, les étapes de fabrication additive comportent une séquence d'étapes de réalisation de couches successives de la pièce prédéterminées, la séquence d'étapes et la forme de la couche de chaque étape pouvant être stockées dans ladite mémoire du système de contrôle

Quel que soit le nombre d'étapes et leur nature, chaque étape du procédé de fabrication peut ainsi être prédéfinie, lors de la conception et de la qualification du procédé, en étant associée à une consigne de chaque paramètre, pour chaque module. Il va de soi que la consigne associée à chaque paramètre peut être identique pour deux étapes, successives ou non, du procédé de fabrication et/ou identique d'un module à l'autre.

Selon l'invention, ladite pluralité de modules de chaque unité de production comporte un premier module équipé d'une machine de fabrication additive. Le cas échéant, ladite machine du premier module peut être agencée pour mettre en œuvre un procédé de photopolymérisation d'une résine photopolymère ou un procédé d'extrusion d'une résine thermoplastique pour fabriquer ladite pièce prédéterminée selon ledit procédé de fabrication.

En variante, ladite machine du premier module peut être agencée pour mettre en œuvre un procédé de dépôt de fil ou extrusion dans lequel un filament est fondu et déposé sur une plateforme d'impression, en formant l'objet couche après couche. En variante encore, ladite machine du premier module peut être agencée pour mettre en œuvre un procédé de fusion de poudre dans lequel un laser fusionne des particules de poudre point par point.

Par exemple, le procédé de photopolymérisation peut être un procédé de stéréolithographie dans lequel la pièce peut être imprimée couche par couche ou encore un procédé d'utilisation de la lumière appelé DLP (en anglais « digital light processing »).

Par exemple encore, le procédé d'extrusion de résine thermoplastique peut être un procédé appelé FFF (en anglais « fused filament fabrication » pour une fabrication par filament en fusion), ou un procédé appelé FDM (en anglais « fused deposition modeling » pour un modelage par dépôt en fusion) ou un procédé appelé CFF (en anglais « continuous fiber fabrication » pour un renfort de fibre en continu).

Avantageusement, ladite pluralité de modules de chaque unité de production comporte un deuxième module de stockage d'une matière première. Le cas échéant, le deuxième module comporte un réservoir de matière première destinée à être utilisée par le premier module pour la fabrication de ladite pièce prédéterminée selon ledit procédé de fabrication.

Selon un exemple, le réservoir de matière première peut être une bobine d'un fil ou d'un filament de matière première enroulé. En variante, le réservoir de matière première peut être une bouteille ou un contenant de matière première, sous forme de poudre ou de résine.

Avantageusement, ladite pluralité de modules de chaque unité de production comporte un troisième module de post-traitement d'une pièce fabriquée selon ledit procédé de fabrication au moyen du premier module et à partir d'une matière première contenue dans le deuxième module et en ce que le troisième module comporte au moins un capteur apte à mesurer une valeur d'un paramètre environnemental ou de fonctionnement ou de l'intégrité dudit module.

Par exemple, le post-traitement peut être un nettoyage de la pièce. Le post traitement peut être une finition de la pièce, par exemple par suppression des aspérités, le troisième module comportant dans ce cas un bac de nettoyage équipé d'outils et/ou de compositions chimiques appropriés. De façon alternative ou cumulative, le post traitement peut être réalisé par ultrasons, le troisième module comportant dans ce cas un nettoyeur à ultrasons.

Selon l'invention, chaque module de ladite pluralité de modules de chaque unité de production comporte au moins un capteur apte à mesurer une valeur d'un paramètre environnemental dudit module choisi parmi les capteurs suivants : capteur de température dans l'enceinte du module, capteur d'humidité dans l'enceinte du module, capteur d'un taux de concentration d'un gaz ou d'une particule donnée dans l'enceinte du module.

Selon un exemple de réalisation, le capteur de température peut permettre de mesurer en degrés Celsius la température au sein du premier et/ou du deuxième module et, en cas de dépassement, constaté par le système de contrôle, de celle-ci au regard d'un seuil donné ou d'une plage donnée par la consigne pour l'étape courante, de déclencher, par le système de contrôle, une alerte pouvant par exemple indiquer une surchauffe d'une machine ou d'un équipement au sein du module.

Selon un exemple de réalisation, le capteur d'humidité peut permettre de mesurer le pourcentage d'humidité au sein du premier et/ou du deuxième module et, en cas de dépassement, constaté par le système de contrôle, de celle-ci au regard d'un seuil donné ou d'une plage donnée par la consigne pour l'étape courante, de déclencher, par le système de contrôle, une alerte de dérive du procédé nécessitant une intervention d'un opérateur. L'utilisation de ces types de capteur peut permettre d'assurer une constance de l'environnement au sein dudit module.

Selon un exemple de réalisation, le capteur de taux de concentration peut permettre de mesurer en ppm (partie par millions) ou en ppb (partie par milliard) ou encore en µg/m3 le taux de CO2 et/ou de composés organiques volatiles (ou COV) et/ou de particules en suspension au sein du premier et/ou du deuxième module et, en fonction d'une comparaison par le système de contrôle de la quantité détectée à un seuil donné par la consigne pour l'étape courante, entrainer le déclenchement, par le système de contrôle, d'une alerte de sécurité. Par exemple, pour un capteur dédié au CO2, on pourra considérer l'exemple suivant : En dessous d'un seuil de 1100 ppm, aucune alerte n'est déclenchée ; au-dessus d'un seuil de 1100, une alerte incendie est déclenchée. L'utilisation de ce type de capteur peut permettre d'améliorer la sécurité des locaux et la mise en place d'une démarche QHSE (qualité, hygiène, sécurité, environnement).

Avantageusement, chaque module de ladite pluralité de modules de chaque unité de production comporte au moins un capteur apte à mesurer une valeur d'un paramètre de fonctionnement dudit module choisi parmi les capteurs suivants : capteur d'un poids de matière première présente dans ledit module, capteur d'une valeur relative à une puissance électrique fournie à un composant électronique dudit module ; capteur de son émis dans l'enceinte dudit module ; capteur d'une image de tout ou partie de l'enceinte dudit module.

Selon un exemple de réalisation, le capteur de poids pourra par exemple être une cellule de force supportant un réservoir de matière première dans le deuxième module. Ce capteur de poids permet ainsi de mesurer en grammes la quantité de matière première contenue dans ce réservoir. Le cas échéant, pour un procédé de fabrication requérant une matière première spécifique alors que le deuxième module contient plusieurs réservoirs de différentes matières première ou que plusieurs deuxièmes modules, ayant chacun un réservoir de matière première différente, sont prévus dans l'unité de production, la comparaison, par le système de contrôle, des poids transmis par les capteurs de poids à chaque consigne prévue pour l'étape courante de ce procédé de fabrication pourra permettre le déclenchement, par le système de contrôle, d'une alerte en cas de mauvais matériau sélectionné. De façon alternative ou cumulative, si le procédé de fabrication requiert une quantité donnée minimum de matière première, le capteur de poids peut permettre le déclenchement d'une alerte de quantité insuffisante de matière première contenue dans le réservoir.

Selon un exemple de réalisation, le capteur d'une valeur relative à une puissance électrique fournie à un composant électronique dudit module pourra être un capteur de courant apte à mesurer l'intensité d'un courant fourni à un équipement prévu dans le premier module, et notamment à la machine de fabrication additive. Le cas échéant, en cas de variation de celle-ci en dehors d'une plage de fonctionnement donnée par la consigne, le système de contrôle pourra déclencher une alerte d'anomalie de fonctionnement de la machine.

Selon un exemple de réalisation, le capteur de son émis dans l'enceinte dudit module pourra comporter un microphone agencé dans le premier module et permettant de capter le son au sein de ce premier module de sorte que le système de contrôle puisse détecter, par comparaison à un son donnée par la consigne, une anomalie, ponctuelle ou répétée, de fonctionnement de la machine de fabrication additive. Le cas échéant, en cas de détection, le système de contrôle pourra déclencher une alerte d'anomalie de fonctionnement de la machine. L'utilisation de ces types de capteur peut permettre la détection des anomalies ainsi que le suivi du statut de la machine et du cycle en cours.

Selon un exemple de réalisation, le capteur d'une image de tout ou partie de l'enceinte dudit module pourra comporter une caméra agencée dans le premier module pour acquérir, de façon périodique, des images de la machine de fabrication additive, de sorte que le système de contrôle puisse mettre en œuvre des algorithmes de traitement d'image et/ou de vidéo sur ces images acquises par la caméra et détecter le cas échéant un évènement de production à partir de ces images. Le système de contrôle pourra ainsi corréler un évènement de production à d'autres alertes émises par le système de contrôle, de sorte à améliorer encore le suivi de la mise en œuvre du procédé de fabrication additive. De façon non limitative, on pourra prévoir que les algorithmes de traitement d'image et/ou de vidéo soient des algorithmes d'apprentissage automatique, par exemple entrainés, à l'aide de jeux d'entrainement constitués d'images et/ou de vidéo de machines de fabrication additive en cours de fonctionnement, à identifier le franchissement d'une étape d'un cycle de fabrication ou un échec lors de la mise en œuvre d'une étape d'un cycle de fabrication.

Selon l'invention, chaque module de ladite pluralité de modules de chaque unité de production comporte au moins un capteur apte à mesurer une valeur d'un paramètre d'intégrité dudit module choisi parmi les capteurs suivants : capteur d'ouverture d'une porte dudit module, interface d'identification d'un opérateur souhaitant accéder au module.

Selon un exemple de réalisation, le capteur d'ouverture d'une porte pourra être un capteur du premier ou du deuxième module apte à indiquer un état ouvert ou fermé d'une porte dudit module. De façon alternative ou cumulative, le capteur d'ouverture d'une porte pourra être un capteur de verrouillage du premier ou du deuxième module permettant d'indiquer si la porte dudit module est verrouillée ou non. La comparaison de l'état de la porte « fermé » ou « ouvert », ou du statut « verrouillé » ou « déverrouillé » par le système de contrôle au regard de la consigne sur cet état ou ce statut prévu pour chaque étape permet, le cas échéant, de déclencher une alerte de perte d'intégrité. On pourra envisager en outre que le système de contrôle compare, en plus du statut ou l'état de la porte renvoyé par le capteur, la durée de ce statut ou de cet état au regard d'une durée maximale d'ouverture ou de déverrouillage autorisé pendant une étape du procédé de fabrication. En d'autres termes, l'utilisation de ce type de capteur peut permettre un suivi des évènements de production.

Dans le cas d'une interface d'identification d'un opérateur souhaitant accéder au module, la comparaison, par le système de contrôle, du ou des identifiants fournis, via cette interface, pendant une étape du procédé de fabrication aux identifiants des opérateurs autorisés à accéder au module pendant cette étape pourra permettre le déclenchement, en cas d'accès par un opérateur non autorisé, d'une alerte de perte d'intégrité.

Avantageusement, l'un au moins des modules de ladite pluralité de modules de chaque unité de production comporte une unité de régulation d'un paramètre environnemental ou de fonctionnement dudit module, et le système de contrôle est agencé pour, en cas de dérive de la valeur dudit paramètre vis-à-vis de ladite consigne dudit paramètre, contrôler ladite unité de régulation de sorte à provoquer une variation dudit paramètre vers ladite consigne.

Selon un exemple, au moins l'un des premier, deuxième ou troisième module peut comporter une unité de régulation. De préférence, les premier, deuxième et troisième module peuvent chacun comporter une unité de régulation.

Selon cette caractéristique, le système de contrôle peut réaliser des corrections des variations qu'il constate, de sorte à pouvoir certifier que toutes les pièces produites ont été fabriquées conformément au procédé de fabrication qui a été qualifié.

Dans un mode de réalisation, l'unité de régulation peut comporter un ventilateur ou un climatiseur, apte à entrainer une diminution de la température dans l'enceinte du module. De façon alternative ou cumulative, l'unité de régulation peut comporter une résistance de chauffage, apte à entrainer une augmentation de la température dans l'enceinte du module. De façon alternative ou cumulative, l'unité de régulation peut comporter un extracteur apte à entrainer une diminution d'un taux de concentration d'un gaz ou d'une particule dans l'enceinte du module. De façon alternative ou cumulative, l'unité de régulation peut comporter un déshumidificateur apte à entrainer une diminution d'un taux d'humidité dans l'enceinte du module. De façon alternative ou cumulative, l'unité de régulation peut comporter un verrou de porte apte à verrouiller ou déverrouiller une porte d'accès à l'enceinte du module. L'unité de régulation peut comporter un relai d'alimentation apte à autoriser ou interdire la fourniture d'une puissance électrique à un composant électronique du module, voire à la totalité du module.

Des exemples de régulation automatique et intelligente, pilotée par les données remontées au système de contrôle, sont donnés ci-dessous à titre non limitatif.

Dans un exemple de réalisation mettant en œuvre un capteur de concentration d'un taux de CO2 dans l'enceinte du premier module et un extracteur prévu dans le premier module : en dessous d'un seuil de 1100 ppm, aucune alerte n'est déclenchée par le système de contrôle ; au-dessus d'un seuil de 1100 et en-dessous d'un seuil de 5000 ppm, une alerte problème incendie est déclenchée par le système de contrôle et une extraction à 60% par l'extracteur est déclenchée par le système de contrôle; au-delà de 5000 ppm, une extraction à 100% par l'extracteur est déclenchée par le système de contrôle.

Dans un autre exemple de réalisation mettant en œuvre un capteur de concentration d'un taux de COV dans l'enceinte du premier module et un extracteur prévu dans le premier module : en dessous de 250 ppb, aucune alerte n'est déclenchée par le système de contrôle ; entre 250 et 2000 ppb, un premier niveau d'alerte opérateur est déclenché par le système de contrôle pour entrainer une extraction à 60% par l'extracteur; au-delà de 2000 ppb ,un deuxième niveau d'alerte opérateur est déclenché par le système de contrôle pour entrainer pour entrainer une extraction à 100% par l'extracteur.

D'autres exemples de fonctions mises en œuvre par le système de contrôle, au moyen de données remontées par les capteurs des modules de l'unité de production ou de chaque unité de production, sont donnés ci-dessous à titre non limitatif.

Avantageusement, en cas d'émission d'une alerte donnée, le système de contrôle peut être agencé pour stopper la mise en œuvre du procédé de fabrication additive par le premier module. Il pourra par exemple s'agir d'une alerte relative à une température indiquant une surchauffe d'une machine ou d'un équipement au sein du premier module et/ou d'une anomalie de fonctionnement d'une machine du premier module et/ou d'une alerte incendie et/ou d'une alerte d'accès à un module, notamment par un utilisateur non autorisé. Le système de contrôle peut ainsi mettre en œuvre des fonctions de respect de normes QHSE (Qualité Hygiène Sécurité Environnement).

Avantageusement, le système de contrôle pourra être agencé, par analyse d'une série de valeurs d'un ou plusieurs paramètres, notamment par comparaison avec un modèle d'évolution du ou desdits paramètres, pour émettre une alerte requérant une maintenance d'une machine ou d'un équipement d'un des modules de l'unité de production. En d'autres termes, le système de contrôle peut mettre en œuvre des fonctions de maintenance anticipée ou prédictive.

Selon l' invention, pour chaque pièce fabriquée par l'unité de production ou par chaque unité de production, le système de contrôle pourra être agencé pour enregistrer, dans un journal :
- chacune des étapes successivement mis en œuvre par l'unité de production pour la fabrication de ladite pièce,
- chacune des valeurs de chaque paramètre communiquées par lesdits capteurs des modules de l'unité de production et/ou chacune des alertes, ou évènements, générées par le système de contrôle et/ou chacune des opérations de régulation réalisées par le système de contrôle au cours de la mise en œuvre desdites étapes.

Le cas échéant, le système de contrôle pourra comporter une interface de visualisation et de validation permettant à un opérateur de visualiser lesdites valeurs, alertes et opérations de régulation enregistrées pour chacune des étapes et de valider, pour chaque pièce fabriquée, lesdites étapes enregistrées, afin de certifier ladite pièce. De façon alternative ou cumulative, le système de contrôler pourra automatiquement valider l'une ou plusieurs, voire chacune, desdites étapes au moyen desdites valeurs, alertes et opérations de régulation enregistrées. A l'issue de la fabrication de ladite pièce, et notamment dans le cas où l'ensemble des étapes du procédé de fabrication ont été validées, le système de contrôle pourra être agencé pour générer une fiche de fabrication associée à ladite pièce et certifiant la conformité de cette pièce. Le système de contrôle met ainsi en œuvre une fonction de journalisation et de certification permettant de garantir, de façon traçable, la conformité d'une pièce.

Avantageusement, le système de contrôle pourra être agencé pour déterminer, à partir des valeurs de paramètre communiquées par lesdits capteurs des modules de l'unité de production, si une machine de fabrication additive de l'unité de production est disponible et/ou en état de fonctionnement et pour attribuer automatiquement la production d'une pièce prédéterminée par un procédé de fabrication additive donné à cette machine ou à une autre machine de l'unité de production en fonction de sa disponibilité et/ou de son état de fonctionnement. Le système de contrôle pourra ainsi réorganiser la production à partir de données remontées en temps réel.

L'invention a également pour objet un procédé de contrôle selon la revendication 6, d'une système de production selon l'invention, caractérisé en ce que, lors de la mise en œuvre d'un procédé de fabrication additive d'une pièce prédéterminée par l'unité de production, et pour chaque étape du procédé de fabrication, le procédé de contrôle comporte les étapes suivantes : acquisition, pendant la mise en œuvre de ladite étape du procédé de fabrication, d'au moins une valeur d'un paramètre environnemental ou de fonctionnement ou d'intégrité par chaque capteur de chaque module de chaque unité de production et transmission de ladite valeur au système de contrôle ; comparaison, par le système de contrôle, de la valeur de chaque paramètre reçue avec la consigne dudit paramètre associée à ladite étape du procédé de fabrication ; et en cas de dérive d'au moins l'une desdites valeurs de paramètre vis-à-vis de ladite consigne dudit paramètre, émission d'une alerte contenant des informations relative audit paramètre, à ladite étape du procédé de fabrication et au module mettant en œuvre cette étape.

Comme décrit ci-dessus, ce procédé permet à une unité de production de dialoguer avec un système de contrôle pour lui remonter différentes données relatives à son environnement de production. Le système de contrôle peut ainsi mettre en œuvre différentes fonctions de gestion intelligente de la chaine de production, au moyen de ces données, comme par exemple :
- une fonction de visualisation en temps réel des paramètres de production, et notamment des paramètres critiques et/ou des étapes des procédés de fabrication qualifiés mis en œuvre par la ou les unités de production du système, notamment via des jumeaux numériques de ces unités de production ;
- une fonction d'organisation de la chaine de production, et notamment de répartition ou d'adaptation automatique des flux de production sur les différentes unités de production ;
- une fonction de qualification des procédés de fabrication et de certification des pièces produites par la ou les unités de production au moyen de ces procédés de fabrication ;
- une fonction de prédiction ou d'anticipation de maintenance des équipements de la ou des unités de production.

Avantageusement, l'acquisition d'au moins une valeur d'un paramètre environnemental ou de fonctionnement ou d'intégrité chaque capteur de chaque module peut être réalisée au moins une fois pendant chaque étape. De préférence, l'acquisition peut être réalisée de manière séquentielle et périodique, plusieurs fois par exemple toutes les 10 secondes ou toutes les 1 minutes. Si on le souhaite, l'acquisition peut être réalisée en continu.

Dans un mode de réalisation de l'invention, si aucune consigne est attribuée pour un paramètre pendant une étape donnée, le système de contrôle ne réalise aucune comparaison de la valeur de ce paramètre acquis par le capteur et transmise au système de contrôle.

Avantageusement, le procédé comporte une étape préalable de conception et de qualification d'un procédé de fabrication additive d'une pièce prédéterminée par l'unité de production, ledit procédé définissant une pluralité d'étapes destinées à être mises en œuvre au moyen de l'un ou de plusieurs des modules de l'unité de production et, pour chaque étape, une consigne de chacun desdits paramètres environnemental ou de fonctionnement ou d'intégrité, et une étape préalable de stockage dudit procédé de fabrication dans la mémoire du système de contrôle dans l'unité de production.

Dans un mode de réalisation, l'étape préalable de génération du procédé peut comporter une étape dans laquelle un fichier de fabrication, par exemple issu d'un logiciel de conception, représentant la pièce prédéterminée, peut être stocké, via un outil de téléchargement, dans la mémoire du système de contrôle. Une machine de fabrication additive prévue dans l'un des premiers modules de l'unité de production ou de l'une ou plusieurs des unités de production peut ensuite être sélectionnée pour être attribuée à la fabrication de ladite pièce et une matière première contenue dans l'un des deuxièmes modules de l'unité de production ou de l'une ou plusieurs des unités de production, apte à être exploitée par la machine attribuée précédemment, peut également être attribué à la fabrication de ladite pièce. Les étapes de fabrication de ladite pièce par la machine attribuée à cette fabrication au moyen de la matière première attribuée à cette fabrication peuvent ensuite être générées, manuellement via une interface de saisie ou automatiquement par le système de contrôle pour être stockées dans ladite mémoire- en tant que procédé de fabrication. Des étapes de préparation en amont de la fabrication, comme le changement de matière première, le nettoyage ou encore le chauffage du premier module, et de finalisation en aval de la fabrication, comme le retrait de la pièce du premier module, la mise à disposition de la machine pour la fabrication de la pièce suivante ou encore la vérification visuelle de l'état de la pièce fabriquée, peuvent également être ajoutées au procédé de fabrication dans ladite mémoire du système de contrôle. Une ou plusieurs étapes de post traitement, comme une peinture de la pièce ou un ponçage de la pièce peut être ajoutée au procédé de fabrication dans ladite mémoire du système de contrôle.

Enfin, une valeur de consigne, comme une plage de tolérance ou des valeurs seuils, pour l'un ou plusieurs, voire chacun des paramètres environnemental ou de fonctionnement ou d'intégrité, pour chacun des modules et pour chacune des étapes, est saisie, via une interface de saisie, pour être stockée dans ladite mémoire du système de contrôle.

Avantageusement, le procédé comporte une étape de visualisation dans laquelle, pour chaque valeur d'un paramètre environnemental ou de fonctionnement ou d'intégrité transmise au système de contrôle et/ou par chaque alerte émise par le système de contrôle et/ou par chaque opération de régulation réalisée par le système de contrôle, une interface graphique du système de contrôle est mise à jour au moyen de ladite valeur. Il pourra par exemple s'agir d'une interface de visualisation d'un jumeau numérique de l'unité de production permettant à un opérateur de visualiser lesdites valeurs, ainsi que les alertes et opérations de régulation, d'une interface de visualisation d'un workflow de production permettant à un opérateur de visualiser les différents procédés de fabrication mis en œuvre par les unités de production du système, ou encore d'une interface de visualisation du stock de matière première.

Avantageusement, pour chaque pièce fabriquée par l'unité de production ou par chaque unité de production, le procédé pourra comporter une étape d'enregistrement, par le système de contrôle, dans un journal :
- de chacune des étapes successivement mis en œuvre par l'unité de production pour la fabrication de ladite pièce,
- de chacune des valeurs de chaque paramètre transmises par lesdits capteurs des modules de l'unité de production au système de contrôle et/ou de chacune des alertes émises par le système de contrôle et/ou chacune des opérations de régulation réalisées par le système de contrôle au cours de la mise en œuvre desdites étapes.

Avantageusement, le procédé pourra comporter une étape de visualisation, par un opérateur via une interface de visualisation et de validation du système de contrôle, desdites valeurs, alertes et opérations de régulation enregistrées pour chacune des étapes et une étape de validation manuelle, pour chaque pièce fabriquée, desdites étapes enregistrées, afin de certifier ladite pièce. En variante, le procédé pourra comporter une étape de validation automatique, par le système de contrôle, de l'une ou de plusieurs, voire de chacune, desdites étapes au moyen desdites valeurs, alertes et opérations de régulation enregistrées.

Avantageusement, pour chaque pièce fabriquée par l'unité de production ou par chaque unité de production, le procédé pourra comporter une étape de génération, par le système de contrôle, d'une fiche comprenant chacune des valeurs de chaque paramètre transmises par lesdits capteurs des modules de l'unité de production au système de contrôle et/ou chacune des alertes émises par le système de contrôle et/ou chacune des opérations de régulation réalisées par le système de contrôle, au cours de la mise en œuvre des étapes de fabrication de ladite pièce. On notera que si la fiche ne comporte aucune alerte et/ou aucune opération de régulation, la pièce peut être certifiée comme ayant été fabriquée conformément au procédé de fabrication qui a été qualifié au préalable.

Avantageusement, le procédé pourra comporter une étape d'arrêt, ordonnée par le système de contrôle, de la mise en œuvre d'un procédé de fabrication additive par une unité de production, en cas d'émission d'une alerte, par le système de contrôle, correspondant à un type d'alerte donné.

L'invention a également pour objet une installation pour une unité de production d'un système de production selon l'invention, l'installation comportant un bloc pourvu d'une paroi arrière, de deux parois latérales, d'une paroi supérieure et d'une paroi inférieure définissant ensemble un volume et une porte montée sur le bloc pour fermer ledit volume, l'installation comportant une paroi de séparation séparant ledit volume en un premier compartiment supérieur destiné à former un module de l'unité de production et un deuxième compartiment inférieur destiné à former un autre module de l'unité de production ; chacune des parois supérieure et de séparation comporte une pluralité de capteurs, chaque capteur étant apte à mesurer une valeur d'un paramètre environnemental du module situé en dessous de cette paroi, ces capteurs étant identiques d'une paroi à l'autre.

On notera que chacun des premier compartiment supérieur et deuxième compartiment inférieur peut former un premier module si on y ajoute une machine de fabrication additive ou un deuxième module si on y ajoute un stock de matière première, ou, le cas échéant, un troisième module si on y ajoute une unité de post-traitement. L'installation forme ainsi un environnement standard, chaque compartiment étant équipé des mêmes capteurs, et que l'on peut adapter pour n'importe quel procédé de fabrication que l'on souhaite certifier selon l'invention, à l'aide desdits capteurs.

Par exemple, une unité de production peut comporter une unique installation équipée de sorte que le premier compartiment supérieur forme un premier module et le deuxième compartiment inférieur forme un deuxième module. Selon un autre exemple, l'unité de production peut comporter une pluralité d'installations équipées pour former une pluralité de premier, de deuxième et de troisième modules. Le nombre d'installations comprises dans l'unité de production peut être défini en fonction de la quantité de pièces à fabriquer et/ou de la complexité du procédé de fabrication à mettre en œuvre et/ou du nombre de procédés de fabrication distincts susceptibles d'être mis en œuvre.

Dans un mode de réalisation d'une unité de production comportant une pluralité d'installations, chacune des installations peut être autonome par rapport aux autres installations. Une installation donnée peut par exemple être dédiée à un matériau en particulier, ou une technologie de fabrication additive donnée, alors que l'unité de production suivante est dédiée à un autre matériau particulier, respectivement une autre technologie de fabrication additive donnée.

Dans un autre mode de réalisation d'une unité de production comportant une pluralité d'installations, les installations peuvent être agencées selon le procédé de fabrication mis en œuvre, par exemple en étant adjacentes deux à deux de sorte que les modules de chaque installation soient destinés à mettre en œuvre des étapes du procédé de fabrication succédant aux étapes mises en œuvre par les modules de l'installation précédente. Un tel agencement peut permettre d'optimiser l'ergonomie d'utilisation de l'unité de production.

Avantageusement, les capteurs de l'installation peuvent être reliés au système de contrôle de l'unité de production par un câble ou un faisceau de câbles, ou en variante par une liaison sans fil, par échange de données selon un protocole donné, par exemple un protocole Wifi^{®} ou un protocole Bluetooth^{®} ou un protocole ANT+.

Avantageusement, chacune des parois supérieure et de séparation comporte au moins deux des capteurs suivants, notamment chacun des capteurs suivants : un capteur de température, un capteur d'humidité, un capteur de taux de concentration de CO2, un capteur de taux de concentration de composés organiques volatiles, un capteur de taux de concentration de particule en suspensions. Le cas échéant, chacun de ces capteurs peut être agencé sous chacune des parois supérieure et de séparation.

Dans un mode de réalisation de l'invention, la paroi de séparation peut être fixée de manière repositionnable aux parois latérales de l'installation. Par exemple, chacune des parois latérales peut comporter une pluralité de perçages répartis verticalement sur toute la hauteur des parois latérales, ladite paroi de séparation pouvant être montée au niveau de l'un desdits perçages.

Selon l'invention, tous les capteurs sont identiques d'une paroi à l'autre, et notamment d'une installation à une autre. En d'autres termes, les installations peuvent être standardisées tout en conservant la possibilité de certifier un procédé de fabrication qui serait mis en œuvre par une unité de production employant ces installations standards. De plus, l'utilisation d'installations standards peut permettre d'optimiser la fabrication, les coûts de production, l'exportation et la mise en service. Avantageusement, un écran peut être installé sur l'installation de manière à pouvoir former une interface de validation manuelle d'étape du procédé de fabrication. De façon alternative ou cumulative, l'écran peut former une interface d'identification d'un opérateur et/ou une interface de déverrouillage de la porte.

Avantageusement, la porte est montée mobile en translation sur le bloc.

Par exemple, la porte peut être montée mobile en translation selon un axe parallèle aux parois latérales de l'installation.

De préférence, un capteur d'ouverture de porte et/ou un verrou électromécanique formant un capteur de verrouillage de porte peut être monté sur ladite porte.

Si on le souhaite, la porte peut être formée par une paroi transparente ou translucide. Avantageusement, l'invention comporte un organe de filtration monté sur la paroi supérieure.

Selon l'invention, la paroi de séparation comporte un organe d'étanchéité agencé pour coopérer avec la porte lorsqu'elle est fermée, la paroi de séparation formant une cloison étanche entre les premier et deuxième compartiments.

Par exemple, l'organe d'étanchéité peut être monté au niveau de la paroi supérieure de l'installation et/ou au niveau de la paroi de séparation de l'installation et/ou au niveau de la paroi inférieure de l'installation.

Cet organe d'étanchéité peut permettre d'étanchéifier chacun des premier et deuxième compartiments l'un par rapport à l'autre. Ainsi, la communication entre les premier et deuxième compartiments peut être évitée lorsque la porte est fermée.

Avantageusement, chacune des parois supérieure et de séparation comporte au moins une unité de régulation d'un paramètre environnemental, ces unités de régulation étant identiques d'une paroi à l'autre.

Par exemple, chacune des parois supérieures et de séparation peut comporter par exemple un ventilateur et/ou une résistance de chauffage et/ou un extracteur et/ou un relai d'alimentation.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, un système de production selon un mode de réalisation de l'invention ;
[Fig. 2] représente, schématiquement et partiellement, une unité de production du système de la [Fig. 1], comportant une pluralité d'installations ;

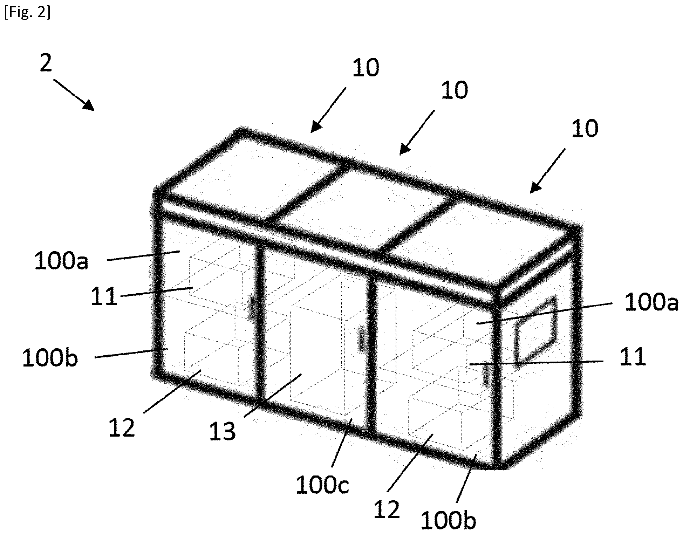

[Fig. 2] représente, schématiquement et partiellement, une vue en perspective d'une installation pour l'unité de production de la [Fig. 2] ;

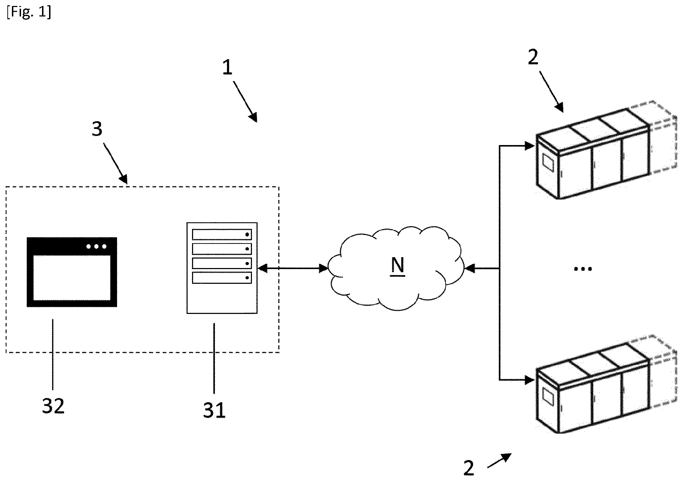

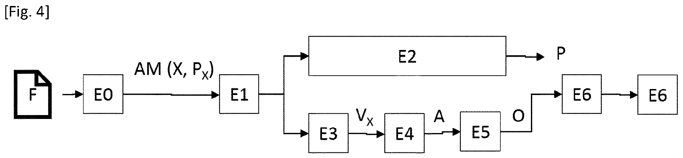

[Fig. 4] représente, schématiquement et partiellement, un procédé de contrôle du système de production de la [Fig. 1] ;

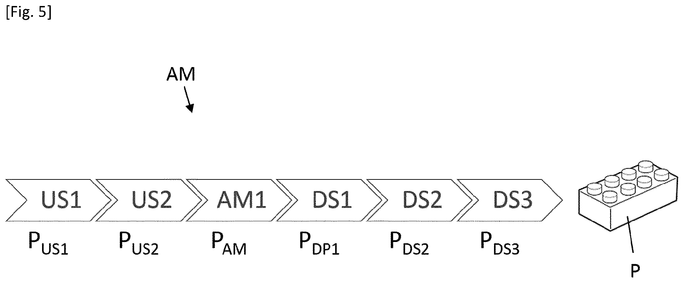

[Fig. 5] représente, schématiquement et partiellement, un procédé de fabrication additive conçu et qualifié lors d'une étape du procédé de la [Fig. 4] ; et

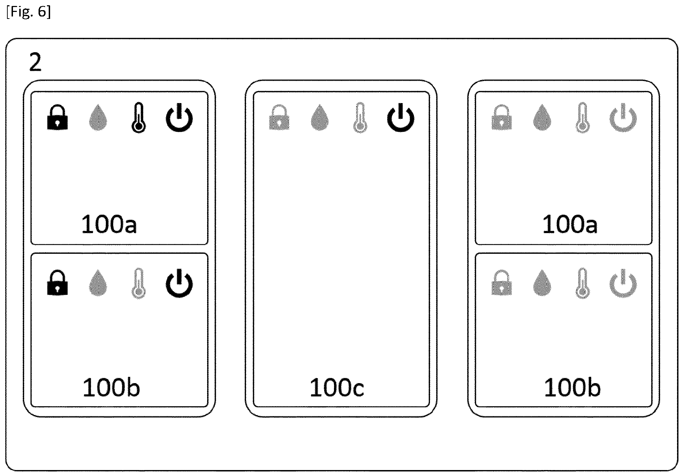

[Fig. 6] représente, schématiquement et partiellement, une vue d'une interface de visualisation du système de contrôle du système de production de la [Fig. 1] issue d'une étape du procédé de la [Fig. 4].

Dans la description qui suit, les éléments identiques, par structure ou par fonction, apparaissant sur différentes figures conservent, sauf précision contraire, les mêmes références.

### Description des modes de réalisation.

On a représenté en [Fig. 1] un système de production 1 selon un mode de réalisation de l'invention. Le système de production 1 comporte, d'une part, une pluralité d'unités de production 2 destinées chacune à réaliser des pièces prédéterminées par des procédés de fabrication additive. De même, on pourra concevoir que les unités de production 2 soient agencées sur un même site de production ou sur différents sites de production, qu'elles soient aptes à mettre en œuvre un même procédé de fabrication additive ou différents types de procédés de fabrication additive, basés sur une même technologie ou différentes technologies, ou encore qu'elles soient destinées à la fabrication d'une même pièce ou à différents types de pièces.

Le système de production 1 comporte, d'autre part, un système de contrôle 3 des unités de production 2. Ce système de contrôle 3 et les fonctions qu'il opère seront décrits ultérieurement.

### Unité de production

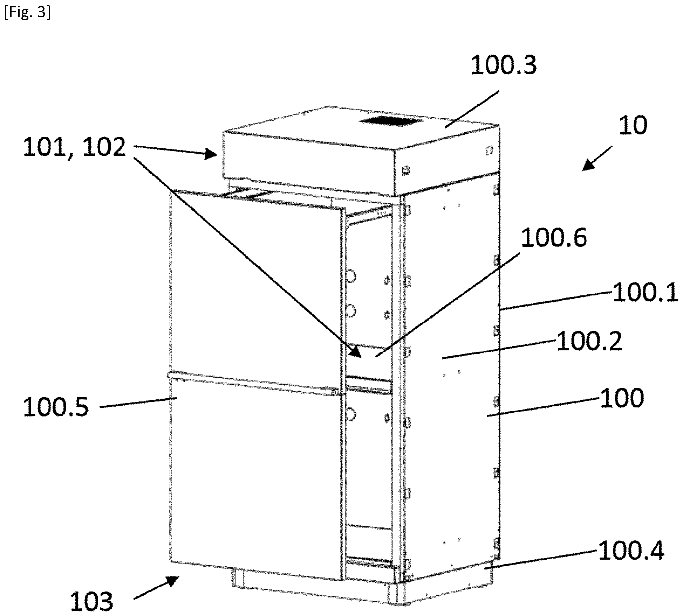

En liaison avec les [Fig. 2] et [Fig. 3], on va décrire en premier lieu un exemple d'une unité de production 2 du système 1, étant entendu que l'invention n'est pas limitée à la structure qui va être décrite, et qu'on pourrait concevoir que d'autres unités de production 2 du système 1 soient structurellement différentes sans sortir du cadre de la présente invention définie par les revendications.

La [Fig. 2] décrit une unité de production 2 comportant une pluralité d'installations 10 montées adjacentes deux à deux, étant entendu que l'agencement et le nombre d'installations représentées dans cette [Fig. 2] sont donnés à titre d'exemple non limitatif seulement.

La [Fig. 3] décrit une installation 10 de l'unité 2 selon un mode de réalisation de l'invention.

Comme montré en [Fig. 3], l'installation 10 comporte un bloc 100, constitué d'une paroi arrière 100.1, de deux parois latérales 100.2 d'une paroi supérieure 100.3 et d'une paroi inférieure 100.4 définissant un volume. Le volume est fermé par une porte 100.5 montée mobile en translation selon un axe parallèle aux parois latérales 100.2.

Dans l'exemple décrit, la porte 100.5 comporte des rails supérieur montés coulissants des glissières prévues contre les parois latérales 100.2, au droit de la paroi supérieure 100.3.

Le volume du bloc 100 est séparé en un premier compartiment supérieur et un deuxième compartiment inférieur par une paroi de séparation 100.6. Les parois latérales 100.2 comportent une pluralité de perçages répartis verticalement sur toute leur hauteur, la paroi de séparation 100.6 étant montée au niveau de l'un desdits perçages. La paroi de séparation 100.6 est fixée de manière repositionnable, par exemple par des vis et des boulons, pour adapter la dimension des compartiments supérieur et inférieur aux dimensions des équipements destinés à y être logés.

Chacun des premier compartiment supérieur et deuxième compartiment inférieur peut être défini comme un premier module 100a si on y ajoute une machine de fabrication additive 11, comme un deuxième module 100b si on y ajoute un stock de matière première 12 ou comme un troisième module 100c si on y ajoute une unité de post-traitement 13 pour la finition de la pièce fabriquée dans le premier module 100a à partir de la matière première du deuxième module 100b.

Par exemple, la machine 11, lorsqu'elle est montée dans le premier compartiment supérieur pour former un premier module 100a, peut être une « imprimante 3D » apte à mettre en œuvre un procédé de fabrication additive de type DLP, FFF, FDM, CFF ou encore SLA (pour stéréolithographie) pour former une pièce P à partir d'une matière première stockée dans un réservoir 12 logé dans le deuxième compartiment inférieur, lequel forme un deuxième module 100b.

Le réservoir 12 de matière première pourra être une ou plusieurs bobines d'un fil ou d'un filament de polymère thermoplastique enroulé, comme du PETG, de l'ABS ou du PLA ou encore une ou plusieurs bouteille de résine sous forme de poudre ou de liquide.

L'unité de post-traitement 13 pourra être un bac de nettoyage, un nettoyeur à ultrason, un poste de peinture ou encore un poste de ponçage.

Dans l'exemple de la [Fig. 2], chaque installation 10 de l'unité 2 a ainsi été équipée d'une machine 11 et/ou d'un réservoir de matière première 12 et/ou d'une unité de post-traitement 13 pour former une pluralité de premiers modules 100a, de deuxièmes modules 100b et de troisièmes modules 100c. On notera que la paroi de séparation 100.6 a été repositionnée pour chaque installation 10, voire a été supprimée de sorte que l'installation ne comporte qu'un compartiment.

De nouveau, on pourra concevoir un nombre de modules différents ou une répartition différente des équipements dans les compartiments sans sortir du cadre de la présente invention définie par les revendications.

Chaque compartiment de chaque installation 10, qu'il soit destiné à former un module 100a, 100b, ou 100c, comporte au moins un capteur 101, 102, 103 apte à mesurer une valeur d'un paramètre environnemental 101 ou de fonctionnement 102 ou d'intégrité 103 dudit module 100a, 100b, 100c, tel que défini dans la revendication 1.

Les capteurs aptes à mesurer la valeur d'un paramètre environnemental 101 sont des capteurs de la température dans l'enceinte du module 100a, 100b, 100c, des capteurs d'humidité de l'enceinte du module 100a, 100b, 100c, des capteurs d'un taux de concentration d'un gaz ou d'une particule donnée dans l'enceinte du module 100a, 100b, 100c. Ces capteurs 101 sont montés sur chacune des parois supérieure 100.3 et de séparation 100.6.

Les capteurs aptes à mesurer la valeur d'un paramètre de fonctionnement 102 sont des capteur d'un poids de matière première 12 présente dans ledit module 100a, 100b, 100c, des capteurs d'une valeur relative à une puissance électrique fournie à un composant électronique dudit module 100a, 100b, 100c ; des capteurs de son émis dans l'enceinte dudit module 100a, 100b, 100c. Ces capteurs 102 sont montés sur chacune des parois supérieure 100.3 et de séparation 100.6.

Les capteurs aptes à mesurer la valeur d'un paramètre d'intégrité 103 sont des capteurs d'ouverture d'une porte 100.5 dudit module 100a, 100b, 100c. Ces capteurs 103 sont montés sur la porte 100.5. On pourra concevoir d'autres emplacements pour les capteurs mentionnés, ou encore un nombre de capteurs différent ou encore d'autres types de capteur que ceux mentionnés sans sortir du cadre de la présente invention.

La paroi supérieure 100.3 et la paroi de séparation 100.6 comportent une unité de régulation d'un paramètre environnemental, par exemple comportant elle-même un ventilateur, une résistance de chauffage ou un relai d'alimentation ou une unité de régulation d'un paramètre de fonctionnement. Par ailleurs, chaque installation 10 comporte un organe de filtration monté sur la paroi supérieure 100.3.

Chaque installation 10 comporte une pluralité d'organes d'étanchéité chacun montés sur la paroi de séparation 100.6, sur la paroi supérieure 100.3 et sur la paroi inférieure 100.4. L'organe d'étanchéité coopère avec la porte 100.5 pour séparer de manière étanche le premier module 100a et le deuxième module 100b.

En d'autres termes, chaque module, quel que soit le type d'équipement qu'il contient, définit ainsi un environnement de production maitrisé dont les paramètres peuvent être mesurés ou estimés au moyen des capteurs de ce module. On notera que les mêmes capteurs sont présents pour chacun des compartiments, de sorte que l'environnement de production est standard et en particulier indépendant du procédé de fabrication qui sera mis en œuvre, du type de pièce qui sera produit, de la technologie employée par l'imprimante 3D, du type de matière première contenant dans le réservoir, du type de post-traitement envisagé et plus largement de tous les paramètres externes au compartiment, comme la localisation géographique de l'installation 10.

Enfin, chaque unité de production 2 comporte des moyens, logiciel et/ou hardware, de communication sans-fil, aptes à échanger des données avec le système de contrôle 3 par un protocole de télécommunication donné, comme un protocole de type Wifi ou de type LTE ou 5G. Lesdits moyens peuvent ainsi recevoir la valeur de chaque paramètre acquise par chaque capteur 101, 102, 103 de chaque module 100a, 100b, 100c pour la relayer au système de contrôle 3. Lesdits moyens peuvent également recevoir, du système de contrôle 3, des instructions de contrôle de la ou des unités de régulation des modules 100a, 100b et 100c et les relayer à ces unités de régulation pour réaliser une opération de régulation.

Du fait de la présence des capteurs 101, 102 et 103, chaque unité de production constitue ainsi une cellule de production intelligente, ou « smart farm », capable de dialoguer en temps réel avec le système de contrôle 3 pour communiquer différentes données relatives à son environnement de production.

### Système de contrôle

Dans l'exemple de la [Fig. 1], le système de contrôle 3 est un système de contrôle distant des unités de production 2. Les unités de production 2 sont ainsi interconnectées avec le système de contrôle 3 au travers d'un réseau N.

Le système de contrôle 3 comporte un serveur 31, pourvu d'une mémoire et capable de réaliser des opérations logiques ou mathématiques sur les données qu'il reçoit des différentes unités de production 2, afin de réaliser des opérations de contrôle ou de gestion de la production par ces unités de production 2.

Le système de contrôle 3 comporte également une interface logicielle 32, par exemple une interface de type SaaS, permettant à un opérateur d'accéder, via le serveur 31, à différents outils de qualification, de visualisation, d'organisation, de maintenance et de certification de la chaine de production formée par les différentes unités de production interconnectées 2.

Plus précisément, et comme cela va être exposé par la suite, le système de contrôle 3 permet :
- de qualifier rapidement et totalement un procédé de fabrication additive, en intégrant toutes les étapes, y compris des étapes amont ou aval de la fabrication additive ;
- de mettre à jour facilement un procédé de fabrication et de remplacer une version d'une pièce par une version plus récente (versioning) ;
- de mettre en place des jumeaux numériques des unités de production et leurs modules permettant de les représenter virtuellement, et dont les paramètres sont mis à jour en fonction des données remontées par les capteurs des unités de production ;
- de journaliser les procédés de fabrication mis en œuvre par les unités de production, au moyen des données remontées par les capteurs des unités de production ;
- de certifier, de façon traçable, qu'une pièce a été produite par une unité de production conformément à un procédé qualifié ;
- de gérer les flux de production, les approvisionnements, les maintenances et plus généralement d'organiser la production sur les différentes unités de production.

On va décrire le fonctionnement de ce système de contrôle 3 et de ces différents outils et avantages au travers du procédé de contrôle décrit en [Fig. 4].

### Procédé de contrôle

La [Fig. 4] représente un schéma-bloc d'un procédé de contrôle du système de production 1, mis en œuvre par le système de contrôle 3, pour la production d'une pièce prédéterminée P via un procédé de fabrication additive qualifié AM par une unité de production 2. Ce procédé de contrôle est ainsi décrit de bout en bout, de la phase de conception et de qualification du procédé AM jusqu'à la certification de la pièce P qui a été fabriquée.

Le procédé comporte une étape préliminaire E0 de conception et de qualification du procédé AM au niveau du système de contrôle 3.

Dans cette étape, un fichier de fabrication F, par exemple un modèle 3D représentant la pièce prédéterminée P sous la forme d'un maillage de ses surfaces, est chargé par un utilisateur via l'interface 32. Ce fichier est stocké dans la mémoire du système de contrôle.

Puis une machine de fabrication additive 11 est sélectionnée par l'utilisateur via l'interface 32, parmi tous les types de machines 11 présentes dans les unités de production 2, par exemple de type SLA, DLP, FFF, FDM, CFF, pour être attribuée à la fabrication de ladite pièce P. De même, une matière première pour la fabrication de la pièce P est sélectionnée par l'utilisateur parmi tous les types de matière première présents dans les unités de production 2, pour être attribuée à la fabrication de ladite pièce P. On pourra prévoir indifféremment que la machine soit sélectionnée par l'utilisateur avant la matière première ou inversement, que le choix de matières premières présenté à l'utilisateur via l'interface 32 dépende, ou non, de la machine précédemment sélectionnée et/ou d'autres critères comme un stock des matières premières dans les différentes unités de production, voire que la sélection de matière première s'effectue automatiquement en fonction de la machine précédemment sélectionnée. L'utilisateur définit ainsi un couple machine/matière première requis pour la fabrication de la pièce P, ce qui constitue une première qualification du procédé de fabrication AM.

Par la suite, des étapes du procédé AM de fabrication de ladite pièce P par la machine sélectionnée au moyen de la matière première sélectionnée peuvent ensuite être générées, manuellement par l'utilisateur via l'interface 32 et/ou automatiquement par le système de contrôle 3.

On a représenté en [Fig. 5] un exemple non limitatif et simplifié de succession d'étapes formant un procédé de fabrication AM conçu au moyen du système de contrôle 3. On pourra prévoir un nombre différent d'étapes ou encore des étapes plus complexes, sans sortir du cadre de la présente invention.

Dans l'exemple décrit, le procédé de fabrication AM comporte :
- une première étape amont, ou upstream, US1 de nettoyage, par un opérateur autorisé, de la machine 11 sélectionnée ;
- une deuxième étape amont US2 de chargement d'une matière première, par un opérateur autorisé, depuis le réservoir 12 sélectionné dans la machine 11 ;
- une troisième étape AM1 de fabrication additive d'une pièce P par la machine 11 à partir de la matière première qui a été chargée ;
- une quatrième étape aval, ou downstream, DS1 de retrait, par un opérateur autorisé, de la pièce P de la machine 11 ;
- une cinquième étape aval DS2 de post-traitement de la pièce P, par ponçage par un opérateur autorisé dans une unité de post-traitement 13 ;
- une sixième étape aval DS3 de contrôle visuel, par un opérateur autorisé, de la pièce P.

Ce procédé AM est stocké dans la mémoire du système de contrôle 3.

Enfin, un ensemble de valeurs de consigne P_{X}, pouvant être une valeur ou une plage de tolérance autour d'une valeur, pour chacun des paramètres surveillés par les capteurs 101, 102 et 103 est saisie, via l'interface 32, pour chacun des modules 100a, 100b et 100c et pour chacune des étapes X du procédé AM. Ces ensembles sont stockés dans la mémoire du système de contrôle en étant associés au procédé AM qui est ainsi qualifié.

On notera que la conception et la qualification du procédé de fabrication AM peuvent réalisées de façon itérative, par exemple en testant le procédé qualifié lors d'une itération pour ensuite ajuster les étapes et/ou les consignes à l'itération suivante. De même, un procédé de fabrication AM stocké dans la mémoire peut être repris afin d'ajuster les consignes ou les étapes lors d'un changement de version de la pièce P ou d'un changement des besoins de qualification.

La mémoire du système de contrôle 3 implémente ainsi une base de données contenant une pluralité de procédés de fabrication AM de pièces données P, ainsi que les différentes versions de ces procédés et pièces, de sorte qu'une pièce P peut être rapidement mise en production depuis le système de contrôle 3 sur une unité de production 2.

Dans une étape E1, une pièce P est mise en production sur une unité de production 2. Un procédé de fabrication AM de la pièce P, voire la pièce P elle-même, est ainsi sélectionnée par un opérateur via l'interface 32. Une unité de production 2 peut être ensuite sélectionnée parmi toutes les unités de production, manuellement par un opérateur via l'interface 32 ou automatiquement par le système de contrôle 3, en fonction de sa disponibilité, du stock de matières premières qu'elle contient, de sa cadence de production, de sa localisation au regard de contraintes logistiques, environnementales ou sociales, ou de tout autre paramètre. Le cas échéant, l'interface 32 pourra comporter un outil de visualisation et d'organisation de la production permettant de visualiser l'état des unités de production 2 et d'attribuer la production d'une pièce ou d'un lot de pièces à une unité de production donnée.

Dans une étape E2, le procédé de fabrication AM de la pièce P est mis en œuvre par l'unité de production 2 sélectionnée lors de l'étape E1.

Parallèlement, dans une étape E3, et pour chaque étape X du procédé AM, le système de contrôle reçoit périodiquement des valeurs V_{X} des paramètres environnementaux, fonctionnement et d'intégrité acquises par chaque capteur 101, 102, 103 de chaque module 100a, 100b, 100c de l'unité de production 2 pendant la mise en œuvre de cette étape X.

Dans une étape E4, chaque valeur reçue V_{X} est comparée par le système de contrôle 3 avec la consigne dudit paramètre P_{X} associée à l'étape courante du procédé de fabrication AM qui est mise en œuvre et au(x) module(s) 100a, 100b et 100c mettant en œuvre cette étape.

Dans une étape E5, en cas de dérive d'au moins l'une desdites valeurs de paramètre V_{X} vis-à-vis de ladite consigne P_{X} dudit paramètre, une alerte A est émise, contenant des informations relative audit paramètre, à ladite étape X du procédé de fabrication et au module 100a, 100b, 100c mettant en œuvre cette étape. Si aucune consigne est attribuée pour un paramètre pendant une étape donnée, le système de contrôle 3 ne réalise aucune comparaison.

Dans une étape E6, en plus de l'émission de l'alerte, le système de contrôle 3 peut déclencher une opération de régulation O par l'unité de régulation du paramètre environnemental, de fonctionnement ou d'intégrité ayant dérivé, de sorte à provoquer une variation de ce paramètre vers la consigne dudit paramètre associée à l'étape courante du procédé de fabrication qui est mise en œuvre et au module 100a, 100b, 100c comprenant cette unité de régulation.

Par exemple, si la quantité de matière première contenue dans le réservoir 12 descend, lors de l'étape US1, au-dessus d'un seuil donné par la consigne de poids P_{US1}, le système de contrôle 3 constate une dérive de ce poids mesuré par le capteur de poids 102 prévu dans le module 100b accueillant ce réservoir 12 au cours de l'étape US1, au regard de cette consigne P_{US1}. Le système de contrôle 3 peut ainsi émettre une alerte « quantité de matière première insuffisante » afin de permettre à un opérateur de réalimenter le stock de l'unité de production 2.

Dans un autre exemple, en cas de dérive d'une température mesurée par un capteur de température 101, ou par un capteur d'un taux de concentration en CO2 101, prévu dans le module 100a accueillant la machine 11 au cours de l'étape AM1, par exemple au-delà d'un seuil donné par la consigne P_{AM}, le système de contrôle 3 émet une alerte incendie et déclenche une extraction de fumée par l'extracteur de l'installation 10 comportant ce module 100a. Le système de contrôle peut également dans ce cas ordonner l'arrêt du procédé de fabrication AM.

De même, le système de contrôle 3 peut observer qu'un son capté, au cours de l'étape AM1, par un capteur de son 102 prévu dans le module 100a accueillant la machine 11, s'écarte d'un modèle sonore de la machine 11 correspondant à un fonctionnement normal. Le système de contrôle 3 peut ainsi émettre une alerte de disfonctionnement de la machine 11.

Dans encore un autre exemple, l'ouverture de la porte 100.5 de l'installation 10 peut être contrôlée par un système d'identification et de contrôle d'accès de cette installation 10, requérant notamment une identification de l'opérateur ouvrant la porte 100.5. Si le système de contrôle 3 constate que l'identifiant remonté par l'installation 10, lors d'une ouverture de la porte 100.5 au cours de l'étape DS1, ne fait pas partie des identifiants associés à des opérateurs autorisés, le système de contrôle 3 émet ainsi une alerte « accès non autorisé ».

Il est à noter que l'ensemble des valeurs V_{X} reçues, les alertes A émises et les opérations de régulation O sont journalisées, c'est-à-dire enregistrées par le système de contrôle 3 dans un journal, ou un log, prévu dans sa mémoire.

On notera également que l'ensemble de ces valeurs V_{X}, alertes A et opérations de régulation O permet au système de contrôle 3 de générer des jumeaux numériques des différents modules 100a, 100b et 100c des différentes unités de production 2, lesquels peuvent être visualisés par un opérateur, via l'interface 32, afin d'observer en temps réel l'état du système de production 1, et en particulier d'identifier des alertes, des besoins de maintenance ou des modules disponibles pour d'autres procédés de fabrication.

Un tel exemple d'outil de visualisation est représenté en [Fig. 6], où l'on constate que pour l'unité de production 2 mettant en œuvre le procédé de fabrication AM de la [Fig. 5], certains modules 100a, 100b et 100c sont indisponibles et qu'une alerte de température est en cours au niveau d'un module 100a.

Dans une étape E6, l'ensemble des valeurs V_{X} récoltées, des alertes A émises et des opérations de régulation O déclenchées au cours de la mise en œuvre du procédé de fabrication AM pour la fabrication de la pièce P est présentée à un opérateur, via l'interface 32. Cet opérateur peut ainsi valider chacune des étapes X du procédé AM, via l'interface 32, s'il considère que ces étapes X ont été correctement réalisées au regard de ces données V_{X}, A et O.

Dans ce cas, dans une étape E7, une fiche de fabrication C, associée à la pièce produite P, est générée par le système de contrôle 3 pour certifier que cette pièce P a été produite conformément au procédé qualifié AM. Dans le cas contraire, on pourra prévoir que le système de contrôle 3 génère une fiche de fabrication C indiquant que la pièce P est non conforme.

Au-delà de l'interface de visualisation des jumeaux numériques représentés en [Fig. 6], on pourra prévoir qu'un opérateur puisse visualiser, via l'interface 32, d'autres types de données, au cours des opérations du système de production 1. On pourra par exemple prévoir un outil de visualisation de l'ensemble des procédés de fabrication mis en œuvre par les unités de production 2 à un instant donné, ou un outil de planification des procédés de fabrication devant être mis en œuvre par les unités de production 2 pendant une période de temps à venir, ou encore un outil de visualisation de statistiques de production du système de production 1.

La description qui précède explique clairement comment l'invention permet d'atteindre les objectifs qu'elle s'est fixée, à savoir proposer un système de production basé sur des imprimantes 3D et permettant, entre autres, de certifier simplement, et de façon traçable, qu'une pièce donnée a été produite selon un procédé de fabrication additive qualifié, permettant d'organiser facilement la chaine de production, et permettant de visualiser en temps réel les paramètres critiques des différents équipements de cette chaine de production, ainsi que les alertes de dérive, de disfonctionnement ou de perte d'intégrité de ces équipements.

## Revendications

1. Système de production (10) comportant :
a. une pluralité d'unités de production d'une pièce (P) prédéterminée par un procédé de fabrication additive, chaque unité de production (10) comportant au moins une installation (1) comportant un bloc (100) pourvu d'une paroi arrière (100.1) , de deux parois latérales (100.2), d'une paroi supérieure (100.3) et d'une paroi inférieure (100.4) définissant ensemble un volume et une porte (100.5) montée sur le bloc (100) pour fermer ledit volume, l'installation (1) comportant une paroi de séparation (100.6) séparant ledit volume en un premier compartiment supérieur formant un module (100a, 100b, 100c) de l'unité de production (10) et un deuxième compartiment inférieur formant un autre module (100a, 100b, 100c) de l'unité de production (10) ; l'un de ces modules étant un premier module équipé d'une machine de fabrication additive, chaque module (100a, 100b) étant apte à mettre en œuvre une ou plusieurs étapes d'un procédé de fabrication additive ; dans laquelle :
i. chacune des parois supérieure (100.3) et de séparation (100.6) comporte une pluralité de capteurs (101, 102, 103), chaque capteur (101) étant apte à mesurer une valeur d'un paramètre environnemental du module situé en dessous de cette paroi (100.3, 100.6), ces capteurs (101, 102, 103) étant identiques d'une paroi (100.3, 100.6) à l'autre, chaque capteur étant choisi parmi les capteurs suivants : capteur de température dans l'enceinte du module (100a, 100b, 100c), capteur d'humidité dans l'enceinte du module (100a, 100b, 100c), capteur d'un taux de concentration d'un gaz ou d'une particule donnée dans l'enceinte du module (100a, 100b, 100c) ;
ii. chaque module (100a, 100b, 100c) comporte des capteurs (103) aptes à mesurer une valeur d'un paramètre d'intégrité dudit module (100a, 100b, 100c) dont un capteur d'ouverture de la porte dudit module (100a, 100b, 100c) et une interface d'identification d'un opérateur souhaitant accéder au module (100a, 100b, 100c) ;
iii. la paroi de séparation (100.6) comporte un organe d'étanchéité agencé pour coopérer avec la porte (100.5) lorsqu'elle est fermée, la paroi de séparation (100.6) formant une cloison étanche entre les premier (100a) et deuxième compartiments (100b) ;
b. un système de contrôle (11) comprenant une mémoire dans laquelle est stockée une pluralité de procédés de fabrication additive de ladite pièce (P) prédéterminée par l'une ou plusieurs des unités de production (10), chaque procédé définissant une pluralité d'étapes destinées à être mises en œuvre au moyen des modules (100a, 100b) et, pour chaque étape, une consigne de chacun desdits paramètres, dont :
i. des étapes dites amont à la fabrication additive ;
ii. des étapes de fabrication additive de la pièce prédéterminée au moyen de la machine de fabrication additive du premier module ;
iii. des étapes dites aval à la fabrication additive ;
chaque étape du procédé de fabrication étant prédéfinie, lors de la conception et de la qualification du procédé, en étant associée à une consigne de chaque paramètre, pour chaque module ; le système de contrôle (11) étant apte à recevoir la valeur de chaque paramètre acquise par chaque capteur de chaque module (100a, 100b) de la ou de chaque unité de production, et, lors de la mise en œuvre du procédé de fabrication par l'une ou plusieurs des unités de production (10), le système de contrôle (11) étant agencé pour comparer la valeur de chaque paramètre acquise par chaque capteur de chaque module (100a, 100b) qu'il reçoit, à la consigne dudit paramètre et pour, en cas de dérive d'au moins l'une desdites valeurs de paramètre vis-à-vis de ladite consigne dudit paramètre, émettre une alerte contenant des informations relative audit paramètre, à l'étape mise en œuvre lors de l'acquisition de ladite valeur de ce paramètre et au module (100a, 100b) mettant en œuvre cette étape **et**, pour chaque pièce fabriquée par chaque unité de production, le système de contrôle (11) étant agencé pour enregistrer, dans un journal :
i. chacune des étapes successivement mis en œuvre par l'unité de production pour la fabrication de ladite pièce,
ii. chacune des valeurs de chaque paramètre transmises par lesdits capteurs des modules de l'unité de production au système de contrôle et/ou chacune des alertes émises par le système de contrôle au cours de la mise en œuvre desdites étapes.

2. Système de production (10) selon la revendication précédente, dans laquelle le premier module (100a) est équipé d'une machine (12) de fabrication additive agencée pour mettre en œuvre un procédé de photopolymérisation d'une résine photopolymère ou un procédé d'extrusion d'une résine thermoplastique pour fabriquer ladite pièce (P) prédéterminée selon ledit procédé de fabrication.

3. Système de production (10) selon la revendication précédente, dans lequel l'autre module comporte un deuxième module de stockage de matière première (3), le deuxième module (100b) comportant un réservoir de matière première destinée à être utilisée par le premier module (100a) pour la fabrication de ladite pièce (P)prédéterminée selon ledit procédé de fabrication.

4. Système de production (10) selon l'une des revendications précédentes, **caractérisé en ce que** chaque module (100a, 100b, 100c) de chaque unité de production comporte au moins un capteur (102) apte à mesurer une valeur d'un paramètre de fonctionnement dudit module (100a, 100b, 100c) choisi parmi les capteurs suivants : capteur d'un poids de matière première (13) présente dans ledit module (100a, 100b, 100c), capteur d'une valeur relative à une puissance électrique fournie à un composant électronique dudit module (100a, 100b, 100c) ; capteur de son émis dans l'enceinte dudit module (100a, 100b, 100c) ; capteur d'une image de tout ou partie de l'enceinte dudit module.

5. Système de production (10) selon l'une des revendications précédentes, dans lequel l'un au moins des modules (100a, 100b, 100c) de ladite pluralité de modules de chaque unité de production comporte une unité de régulation d'un paramètre environnemental ou de fonctionnement dudit module (100a, 100b, 100c), et dans lequel le système de contrôle (11) est agencé pour, en cas de dérive de la valeur dudit paramètre vis-à-vis de ladite consigne dudit paramètre, contrôler ladite unité de régulation de sorte à provoquer une variation dudit paramètre vers ladite consigne.

6. Procédé de contrôle d'un système de production (10) selon l'une des revendications précédentes, **caractérisé en ce que**, lors de la mise en œuvre d'un procédé de fabrication additive d'une pièce prédéterminée par l'unité de production ou l'une ou plusieurs des unités de production (10), et pour chaque étape du procédé de fabrication, le procédé de contrôle comporte les étapes suivantes :
- Acquisition, pendant la mise en œuvre de ladite étape du procédé de fabrication, d'au moins une valeur d'un paramètre environnemental ou de fonctionnement ou d'intégrité par chaque capteur (101, 102, 103) de chaque module (100a, 100b, 100c) de chaque unité de production (10) et transmission de ladite valeur au système de contrôle (11) ;
- Comparaison, par le système de contrôle (11), de la valeur de chaque paramètre reçue avec la consigne dudit paramètre associée à ladite étape du procédé de fabrication ; et
- En cas de dérive d'au moins l'une desdites valeurs de paramètre vis-à-vis de ladite consigne dudit paramètre, émission d'une alerte contenant des informations relative audit paramètre, à ladite étape du procédé de fabrication et au module (100a, 100b, 100c) mettant en œuvre cette étape.

7. Procédé selon la revendication précédente, **caractérisé en ce qu'**il comporte une étape préalable de conception et de qualification d'un procédé de fabrication additive d'une pièce (P) prédéterminée par l'unité de production (10), ledit procédé définissant une pluralité d'étapes destinées à être mises en œuvre au moyen de l'un ou de plusieurs des modules de l'unité de production (10) et, pour chaque étape, une consigne de chacun desdits paramètres environnemental ou de fonctionnement ou d'intégrité, et une étape préalable de stockage dudit procédé de fabrication dans la mémoire du système de contrôle (11) dans l'unité de production (10).

## Patentansprüche

1. Produktionssystem (10) umfassend:
a. eine Vielzahl von Einheiten zum Produzieren eines zuvor bestimmten Teils (P) durch ein Additivfertigungsverfahren, jede Produktionseinheit (10) umfassend mindestens eine Anlage (1), umfassend einen Block (100), der mit einer Rückwand (100.1), zwei Seitenwänden (100.2), einer oberen Wand (100.3) und einer unteren Wand (100.4) versehen ist, die zusammen ein Volumen definieren, und eine Tür (100.5), die an dem Block (100) montiert ist, zum Verschließen des Volumens, die Anlage (1) umfassend eine Trennwand (100.6), die das Volumen in ein erstes oberes Fach, das ein Modul (100a, 100b, 100c) der Produktionseinheit (10) ausbildet, und ein zweites unteres Fach trennt, das ein weiteres Modul (100a, 100b, 100c) der Produktionseinheit (10) ausbildet; wobei eines dieser Module ein erstes Modul ist, das mit einer Additivfertigungsmaschine ausgestattet ist, wobei jedes Modul (100a, 100b) geeignet ist, um einen oder mehrere Schritte eines Additivfertigungsverfahrens zu implementieren; wobei:
i. jeweils die obere Wand (100.3) und die Trennwand (100.6) eine Vielzahl von Sensoren (101, 102, 103) umfassen, wobei jeder Sensor (101) geeignet ist, um einen Wert eines Umgebungsparameters des Moduls zu messen, das sich unterhalb dieser Wand (100.3, 100.6) befindet, wobei diese Sensoren (101, 102, 103) von einer Wand (100.3, 100.6) zu der anderen identisch sind, wobei jeder Sensor aus den folgenden Sensoren ausgewählt ist: Temperatursensor in dem Modulgehäuse (100a, 100b, 100c), Feuchtigkeitssensor in dem Modulgehäuse (100a, 100b, 100c), Sensor einer Konzentrationsrate eines Gases oder eines gegebenen Partikels in dem Gehäuse des Moduls (100a, 100b, 100c);
ii. jedes Modul (100a, 100b, 100c) Sensoren (103) umfasst, die geeignet sind, um einen Wert eines Integritätsparameters des Moduls (100a, 100b, 100c) zu messen, einschließlich eines Sensors zum Öffnen der Tür des Moduls (100a, 100b, 100c) und einer Schnittstelle zum Identifizieren eines Bedieners, der auf das Modul (100a, 100b, 100c) zugreifen möchte;
iii. die Trennwand (100.6) ein Dichtungselement umfasst, das zum Zusammenwirken mit der Tür (100.5) angeordnet ist, wenn sie geschlossen ist, wobei die Trennwand (100.6) eine wasserdichte Innenwand zwischen dem ersten (100a) und dem zweiten Fach (100b) ausbildet;
b. ein Steuersystem (11), das einen Speicher aufweist, in dem eine Vielzahl von Additivfertigungsverfahren des zuvor bestimmten Teils (P) durch die eine oder die mehreren Produktionseinheiten (10) gespeichert ist, wobei jedes Verfahren eine Vielzahl von Schritten, die dafür bestimmt sind, mittels der Module (100a, 100b) implementiert zu werden, und für jeden Schritt einen Sollwert jedes der Parameter definiert, darunter:
i. Schritte, die der Additivfertigung vorgeschaltet sind;
ii. Schritte für die Additivfertigung des zuvor bestimmten Teils mittels der Additivfertigungsmaschine des ersten Moduls;
iii. Schritte, die der Additivfertigung nachgeschaltet sind;
wobei jeder Schritt des Fertigungsverfahrens während des Entwurfs und der Qualifizierung des Verfahrens vordefiniert wird, indem für jedes Modul ein Sollwert jedes Parameters zugeordnet wird
; wobei das Steuersystem (11) geeignet ist, um den Wert jedes Parameters zu empfangen, der durch jeden Sensor jedes Moduls (100a, 100b) der oder jeder Produktionseinheit erfasst wird, **und** wobei, während der Implementierung des Fertigungsverfahrens durch die eine oder mehrere der Produktionseinheiten (10), das Steuersystem (11) zum Vergleichen des Werts jedes Parameters, der durch jeden Sensor jedes Moduls (100a, 100b) erfasst wird, den es empfängt, mit dem Sollwert des Parameters, und zum Ausgeben, in dem Falle einer Abweichung von mindestens einem der Parameterwerte gegenüber des Sollwerts des Parameters, einer Warnung, die Informationen enthält, die sich auf den Parameter beziehen, in dem Implementierungsschritt während der Erfassung des Wert dieses Parameters und an das Modul (100a, 100b) angepasst ist, das diesen Schritt implementiert
**und,** für jedes Teil, das durch die Produktionseinheit gefertigt wird, das Steuersystem (11) zum Aufzeichnen, in einem Log, angeordnet ist von:
i. jedem der Schritte, die durch die Produktionseinheit für die Fertigung des Teils nacheinander implementiert werden,
ii. jedem der Werte jedes Parameters, die durch die Sensoren der Module der Produktionseinheit an das Steuersystem übertragen werden, und/oder jeder der Warnungen, die durch das Steuersystem im Laufe der Implementierung der Schritte ausgegeben werden.

2. Produktionssystem (10) nach dem vorstehenden Anspruch, wobei das erste Modul (100a) mit einer Additivfertigungsmaschine (12) ausgestattet ist, die zum Implementieren eines Photopolymerisationsverfahrens eines Photopolymerharzes oder eines Extrusionsverfahrens eines thermoplastischen Harzes zum Fertigen des zuvor bestimmten Teils (P) gemäß dem Produktionsverfahren angeordnet ist.

3. Produktionssystem (10) nach dem vorstehenden Anspruch, wobei das andere Modul ein zweites Rohstoffspeichermodul (3) umfasst, wobei das zweite Modul (100b) einen Rohstoffvorrat umfasst, der dafür bestimmt ist, durch das erste Modul (100a) für die Fertigung des zuvor bestimmten Teils (P) gemäß dem Fertigungsverfahren verwendet zu werden.

4. Produktionssystem (10) nach einem der vorstehenden Ansprüche, **dadurch gekennzeichnet, dass** jedes Modul (100a, 100b, 100c) jeder Produktionseinheit mindestens einen Sensor (102) umfasst , der geeignet ist, um einen Wert eines Betriebsparameters des Moduls (100a, 100b, 100c) zu messen, der aus den folgenden Sensoren ausgewählt wird: Sensor eines Gewichts von Rohstoff (13), der in dem Modul (100a, 100b, 100c) vorhanden ist, Sensor eines Werts, der sich auf eine elektrische Leistung bezieht, die einer elektronischen Komponente des Moduls (100a, 100b, 100c) bereitgestellt wird; Sensor für Schall, der in dem Gehäuse des Moduls (100a, 100b, 100c) ausgegeben wird; Sensor eines Bildes des gesamten oder eines Anteils des Gehäuses des Moduls.

5. Produktionssystem (10) nach einem der vorstehenden Ansprüche, wobei mindestens das eine der Module (100a, 100b, 100c) der Vielzahl von Modulen jeder Produktionseinheit eine Einheit zum Regulieren eines Umgebungsparameters oder Betriebs des Moduls (100a, 100b, 100c) umfasst und wobei das Steuersystem (11) zum Steuern, in dem Falle einer Abweichung des Werts des Parameters gegenüber des Sollwerts des Parameters, der Regulierungseinheit angepasst ist, um eine Variation des Parameters in Richtung des Sollwerts zu bewirken.

6. Verfahren zum Steuern eines Produktionssystems (10) nach einem der vorstehenden Ansprüche, **dadurch gekennzeichnet, dass** während der Implementierung eines Additivfertigungsverfahrens eines zuvor bestimmtes Teils durch die Produktionseinheit oder die eine oder mehrere der Produktionseinheiten (10) und für jeden Schritt des Fertigungsverfahrens das Steuerverfahren die folgenden Schritte umfasst:
- Erfassen, während der Implementierung des Schritts des Fertigungsverfahrens, von mindestens einem Wert eines Umgebungs- oder Betriebs- oder Integritätsparameters durch jeden Sensor (101, 102, 103) jedes Moduls (100a, 100b, 100c) jeder Produktionseinheit (10) und Übertragen des Werts an das Steuersystem (11);
- Vergleichen, durch das Steuersystem (11) des Werts jedes empfangenen Parameters mit dem Sollwert für den Parameter, der dem Schritt des Fertigungsverfahrens zugeordnet ist; und
- im Falle einer Abweichung mindestens eines der Parameterwerte gegenüber des Sollwerts für den Parameter, Ausgeben einer Warnung, die Informationen enthält, die sich auf den Parameter beziehen, an den Schritt des Fertigungsverfahrens und des Moduls (100a, 100b, 100c), das diesen Schritt implementiert.

7. Verfahren nach dem vorstehenden Anspruch,
**dadurch gekennzeichnet, dass** es einen vorläufigen Schritt des Entwurfs und der Qualifizierung eines Additivfertigungsverfahrens eines zuvor bestimmten Teils (P) durch die Produktionseinheit (10) umfasst, wobei das Verfahren eine Vielzahl von Schritten, die dafür bestimmt sind, mittels des einen oder mehrerer der Module der Produktionseinheit (10) und für jeden Schritt einen Sollwert jeweils des Umgebungs- oder Betriebs- oder Integritätsparameters und einen vorherigen Schritt zum Speichern des Fertigungsverfahrens in dem Speicher des Steuerungssystems (11) in der Produktionseinheit (10) definiert.

## Claims

1. A production system (10) comprising:
a. a plurality of units for producing a predetermined part (P) by an additive manufacturing method, each production unit (10) comprising at least one installation (1) comprising a block (100) provided with a rear wall (100.1), two side walls (100.2), a top wall (100.3) and a bottom wall (100.4) together defining a volume, and a door (100.5) mounted on the block (100) to close said volume, the installation (1) comprising a partition wall (100.6) separating said volume into a first upper compartment forming a module (100a, 100b, 100c) of the production unit (10) and a second lower compartment forming another module (100a, 100b, 100c) of the production unit (10); one of these modules being a first module equipped with an additive manufacturing machine, each module (100a, 100b) being able to implement one or more steps of an additive manufacturing method, wherein:
i. each of the top (100.3) and partition (100.6) walls comprises a plurality of sensors (101, 102, 103), each sensor (101) being able to measure a value of an environmental parameter of the module located below this wall (100.3, 100.6), these sensors (101, 102, 103) being identical from one wall (100.3, 100.6) to the next, each sensor being chosen from the following: temperature sensor in the enclosure of the module (100a, 100b, 100c), humidity sensor in the enclosure of the module (100a, 100b, 100c), sensor of a concentration level of a given gas or particle in the enclosure of the module (100a, 100b, 100c);
ii. each module (100a, 100b, 100c) comprises sensors (103) capable of measuring a value of an integrity parameter of said module (100a, 100b, 100c), including a sensor for opening the door of said module (100a, 100b, 100c) and an interface for identifying an operator wishing to access the module (100a, 100b, 100c);
iii. the partition wall (100.6) comprises a sealing member arranged to engage with the door (100.5) when it is closed, the partition wall (100.6) forming a sealed partition between the first (100a) and second (100b) compartments;
b. a control system (11) comprising a memory wherein a plurality of methods are stored for additive manufacturing of said part (P) predetermined by one or more of the production units (10), each method defining a plurality of steps intended to be implemented by means of the modules (100a, 100b) and, for each step, a setpoint for each of said parameters, including:
i. steps said to be upstream of the additive manufacturing;
ii. steps for additive manufacturing of the predetermined part by means of the additive manufacturing machine of the first module;
iii. steps said to be downstream of the additive manufacturing;
each step of the manufacturing method being predefined, during the design and qualification of the method, by being associated with a setpoint for each parameter, for each module
; the control system (11) being able to receive the value of each parameter acquired by each sensor of each module (100a, 100b) of the or each production unit, **and,** during implementation of the manufacturing method by one or more of the production units (10), the control system (11) being arranged to compare the value of each parameter acquired by each sensor of each module (100a, 100b) it receives to the setpoint of said parameter and, in the event of drift of at least one of said parameter values with respect to said setpoint of said parameter, to issue an alert containing information relating to said parameter, to the step implemented during acquisition of said value of this parameter and to the module (100a, 100b) implementing this step
**and,** for each part manufactured by each production unit, the control system (11) is arranged to record, in a log:
i. each of the steps successively implemented by the production unit to manufacture said part,
ii. each of the values of each parameter transmitted by said sensors of the production unit modules to the control system and/or each of the alerts issued by the control system during implementation of said steps.

2. The production system (10) according to the preceding claim, wherein the first module (100a) is equipped with an additive manufacturing machine (12) arranged to implement a photopolymerization method of a photopolymer resin or an extrusion method of a thermoplastic resin to manufacture said predetermined part (P) according to said manufacturing method.

3. The production system (10) according to the preceding claim, wherein the other module comprises a second raw material storage module (3), the second module (100b) comprising a raw material reservoir intended to be used by the first module (100a) for manufacturing said predetermined part (P) according to said manufacturing method.

4. The production system (10) according to one of the preceding claims, **characterized in that** each module (100a, 100b, 100c) of each production unit comprises at least one sensor (102) capable of measuring a value of an operating parameter of said module (100a, 100b, 100c) chosen from the following sensors: sensor of a weight of raw material (13) present in said module (100a, 100b, 100c), sensor of a value relating to an electrical power supplied to an electronic component of said module (100a, 100b, 100c); sensor of sound emitted in the enclosure of said module (100a, 100b, 100c); sensor of an image of all or part of the enclosure of said module.

5. The production system (10) according to one of the preceding claims, wherein at least one of the modules (100a, 100b, 100c) of said plurality of modules of each production unit comprises a unit for regulating an environmental or operating parameter of said module (100a, 100b, 100c), and wherein the control system (11) is arranged, in the event of drift of the value of said parameter with respect to said setpoint of said parameter, to control said regulating unit so as to cause a variation of said parameter toward said setpoint.

6. A control method for a production system (10) according to one of the preceding claims, **characterized in that,** during the implementation of a method for the additive manufacture of a predetermined part by the production unit or one or more of the production units (10), and for each step of the manufacturing method, the control method comprises the following steps:
- Acquiring, during implementation of said step of the manufacturing method, at least one value of an environmental or operating or integrity parameter by each sensor (101, 102, 103) of each module (100a, 100b, 100c) of each production unit (10) and transmitting said value to the control system (11);
- Comparing, via the control system (11), the value of each parameter received with the setpoint of said parameter associated with said step of the manufacturing method; and
- In the event of drift of at least one of said parameter values with respect to said parameter setpoint, issuing an alert containing information relating to said parameter, to said manufacturing method step and to the module (100a, 100b, 100c) implementing this step.

7. The method according to the preceding claim, **characterized in that** it comprises a preliminary step of designing and qualifying a method for additive manufacturing of a predetermined part (P) by the production unit (10), said method defining a plurality of steps intended to be implemented by means of one or more of the modules of the production unit (10) and, for each step, a setpoint for each of said environmental or operating or integrity parameters, and a prior step of storing said manufacturing method in the memory of the control system (11) in the production unit (10).
